# EUROPÄISCHE PATENTSCHRIFT

(11) **EP 1 085 973 B1**
(45) Veröffentlichungstag und Bekanntmachung des Hinweises auf die Patenterteilung: **17.12.2003**
(21) Anmeldenummer: 99923556.7
(22) Anmeldetag: 07.05.1999
(51) Int. Cl.: B31F 5/04, C09J 171/02, C09J 175/04, B65D 27/14

(54) **VERFAHREN ZUR HERSTELLUNG VON PAPIERVERBUNDEN UND BEFEUCHTUNGSKLEBRIGEN MATERIALIEN**
METHOD FOR PRODUCING PAPER-BASED COMPOSITES AND WET-ADHESIVE MATERIALS
PROCEDE DE PRODUCTION DE COMPOSITES A BASE DE PAPIER ET DE MATERIAUX COLLANTS SOUS L'EFFET D'UNE HUMECTATION

(30) Priorität: 14.05.1998 DE 19821769
(43) Veröffentlichungstag der Anmeldung: 28.03.2001
(73) Patentinhaber: Henkel Kommanditgesellschaft auf Aktien, 40589 Düsseldorf (DE)
(72) Erfinder: PÜRKNER, Eckhard, D-40595 Düsseldorf (DE); HOCH, Susanne, D-46047 Oberhausen (DE); GENSCH, Ingo, D-52441 Linnich (DE); HEEMANN, Marcus, D-41468 Neuss (DE); MÖLLER, Thomas, D-40593 Düsseldorf (DE)
(86) Internationale Anmeldenummer: EP9903150
(87) Internationale Veröffentlichungsnummer: WO99059808

(56) Entgegenhaltungen:
- EP-A- 0 705 895
- US-A- 3 629 027
- US-A- 3 753 944
- US-A- 5 401 557

## Beschreibung

Die Erfindung betrifft ein Verfahren zur Herstellung mindestens zweilagiger Papierverbunde oder von befeuchtungsklebrigen Materialien unter Verwendung wasserlöslicher Schmelzklebstoffe.

Hygienepapiere sollen in der Regel besonders hautfreundlich sein, d. h., sie sollen bei der Benutzung an empfindlichen Körperstellen möglichst wenig Hautirritationen hervorrufen. Neben einer Kontrolle der migrierfähigen Inhaltsstoffe der Hygienepapiere spielt zu einer Erzielung dieses Effekts in hohem Maße die subjektiv empfundene "Weichheit" oder "Sanftheit" der Hygienepapiere eine Rolle. Üblicherweise wird ein besonders weicher und sanfter Eindruck dadurch erreicht, daß das Hygienepapier aus mehreren dünnen Lagen zusammengestellt wird. Zwischen diesen einzelnen Lagen soll vom Gesichtspunkt der Anwenderfreundlichkeit jedoch eine merkliche Haftung bestehen, damit die Hygienepapiere sich bei deren Gebrauch nicht sofort in einzelne Lagen auflösen und sich damit ihre Handhabung deutlich verschlechtert. Eine weitere Tendenz im Bereich der Hygienepapiere geht jedoch dahin, die Zahl der Lagen, die zur Erzielung eines möglichst weichen Effekts notwendig sind, soweit wie möglich zu verringern. Die Herstellung und Zusammenführung mehrerer Lagen ist in der Regel kostspieliger als die Herstellung eines beispielsweise auf nur zwei Lagen reduzierten Hygienepapiers.

Um trotzdem den geforderten, samtigen Oberflächeneffekt zu erreichen, wird die Oberfläche der Hygienepapiere in der Regel durch Prägung oder andere Behandlungen, die beispielsweise die Ausrichtung der Fasern auf der Papieroberfläche beeinflussen, modifiziert. Versucht man nun eine Verklebung der einzelnen Lagen des Hygienepapiers mittels eines wasserlöslichen Klebstoffs zu erreichen, so bringt dies mehrere Nachteile mit sich. Beispielsweise übt Wasser als Lösemittel für den Klebstoff auf die Papieroberfläche eine nachteilige Wirkung aus. Dies drückt sich beispielsweise in Faltenbildung, Schrumpfung oder Glättung der Papieroberfläche aus. All diese Effekte haben einen nachteiligen Einfluß auf die Beschaffenheit der Oberfläche im Hinblick auf ein möglichst "samtiges" Gefühl beim Anwender.

Ähnliche Phänomene wie Faltenbildung oder Schrumpfung treten auch bei der Herstellung befeuchtungsklebriger Materialien, beispielsweise von Briefmarken, Briefumschlägen oder Etiketten, auf.

Weiterhin erfordert die Verwendung wasserlöslicher Klebstoffe im Laufe des Verklebungsverfahrens eine Trocknungsstufe, bei der Wasser aus dem verklebten Hygienepapier entfernt wird. Solche Trocknungsstufen sind in der Regel energieintensiv und führen zu einer Verteuerung und zeitlichen Verzögerung des Produktionsprozesses.

Ein weiterer Nachteil bei der Verwendung wasserlöslicher Klebstoffe besteht außerdem darin, daß in der Regel eine längere Zeitspanne vergeht, bis die Adhäsions- und Kohäsionswerte eine ausreichende Haftung der einzelnen Papierlagen ermöglichen. Dies übt einen nachteiligen Einfluß auf die weitere Verarbeitung der verklebten Lagen aus, d. h., die verklebten Papierlagen sind in der Regel erst nach der Trocknung ausreichend mechanisch belastbar.

Eine weitere Anforderung an Klebstoffe, die zur Verklebung von Hygienepapieren eingesetzt werden besteht darin, daß die Klebstoffe möglichst vollständig wasserlöslich sein sollen. Dieses Erfordernis beruht auf der hohen Recyclingquote bei der Herstellung von Hygienepapieren, d. h. daß Produktionsabfälle möglichst direkt wieder bei der Herstellung neuer Papierlagen eingesetzt werden müssen. Hierzu ist es jedoch erforderlich, daß die Verklebung zwischen den einzelnen Papierlagen vollständig aus einem Recycling-Faserbrei entfernt wird. Wasserunlösliche oder schlecht wasserlösliche Klebstoffbestandteile, die während der Produktion einer neuen Papierlage aus dem recycelten Fasermaterial in die Papierbahn geraten, können zu schwerwiegenden Produktionsausfällen führen. Üblicherweise bilden solche Klebstoffreste in den recycelten Papierbahnen sogenannte "Stickies", d. h. klebrige Punkte die zu einem Festkleben der Papierbahn an Walzen und ähnlichen Führungselementen für die Papierbahn führen können. Dies hat üblicherweise ein Abreißen der Papierbahn und langwierige Produktionsunterbrechungen zur Folge. Es ist daher nicht nur erforderlich, daß die Verklebung durch Wasser wieder lösbar ist und dabei zu einer Dispersion des Klebstoffs im Wasser führt, sondern der Klebstoff selbst soll vollständig in Wasser löslich sein. Dadurch wird verhindert, daß eventuell ausgetragene Klebstoffreste fein verteilt zu klebrigen Agglomeraten (Stickies) führen.

Die EP-A 0 705 895 betrifft ein Verfahren zur Verklebung von Tissue oder Nonwovens, bei dem eine Schmelzklebstoffzusammensetzung verwendet wird, die aus bis zu 60 % eines Stärkeesters, bis zu 40 % eines polaren Wachses, bis zu 50 % eines Weichmachers, bis zu 25 % eines Tackifiers und bis zu 3 % eines Antioxidans enthält. Während diese Klebstoffzusammensetzung zwar die Grunderfordemisse an einen Klebstoff zur Verklebung von Hygienepapierlagen erfüllt, sind jedoch nicht alle Bestandteile des Klebstoffs vollständig wasserlöslich. Dies kann zu den oben beschriebenen Nachteilen bei dem Recycling von solchen Hygienepapieren führen.

Die US-A-3753944 beschreibt wasserlösliche Schmelzklebstoff-Zusammensetzungen, die im wesentlichen aus 90 bis 30 Gew.-% eines Polyethylenoxids mit einem Molekulargewicht von 15000 bis 50000 und 10 bis 70 Gew.-% eines wasserlöslichen Polyalkylenoxids mit einem Molekulargewicht von 190 bis ca. 15000 bestehen. Diese Klebstoffe werden als "pick-up" und "tail tying"-Klebstoffe eingesetzt, also für die Verklebung einer Papierlage an einer Hülse am Beginn des Aufwickel-Prozesses zur Herstellung einer Papierrolle und zum Fixieren der letzten Papierlage auf die darunter liegende Papierlage beim Abschluß des Aufwickel-Vorganges. Die Haftklebrigkeit dieser Klebstoffe ist dabei so bemessen, daß bei Gebrauch die Rolle leicht abgewickelt werden kann, ohne daß der Papierverbund dabei zerstört wird.

Die US-A-3629027 beschreibt ein Verfahren und eine Vorrichtung zum Verkleben flexibler Substrate mit klebrigen kurzen feinen Klebstoff-Fasem oder Filamenten aus thermoplastischem Material. Die eingesetzten thermoplastischen Schmelzkiebstoffe werden erhalten durch Pfropfcopolymerisation von Vinylacetat auf Polyethylenoxid und sind wasserlöslich oder wasserdispergierbar.

Die US-A-5401557 beschreibt einen Faden- verstärkten Papierbogen, bestehend aus einer oberen und unteren Lage aus Papier, wobei sich der verstärkende Faden zwischen den Papierlagen befindet und die Papierlagen miteinander laminiert sind unter Verwendung eines wasserlöslichen oder wasserdispergierbaren Klebstoffes. Der komplette Faden- verstärkte Papierbogen kann regeneriert werden.

Die JP-A-6049423 beschreibt ein Verfahren zur Herstellung von Wellpappe und Verpackungspapier mittels eines wasserlöslichen Schmelzklebstoffs auf Basis von Polyvinylalkohol mit unterschiedlichen Verseifungsgrad. Die so verklebten Papiere sind recycelbar.

Es bestand also die Aufgabe, einen Schmelzklebstoff zur Verklebung von Hygienepapierlagen zur Verfügung zu stellen, der als Schmelze auftragbar ist, einen sauberen Auftrag noch in geringsten Auftragsmengen (weniger als 0,1 g/m²) zuläßt, eine feste, dauerhafte und schnelle Verklebung nach dem Zusammenfügen zweier zu verklebender Papierbahnen gewährleistet und außerdem vollständig wasserlöslich ist, d. h., mit Wasser in beliebiger Menge mischbar ist.

Es wurde nun gefunden, daß wasserlösliche Polymere mit einer Wasserlöslichkeit von mindestens 3 Gew.-% bei 20°C die oben genannten Nachteile nicht aufweisen.

Gegenstand der Erfindung ist demnach ein Verfahren zur Herstellung mindestens zweilagiger Papierverbunde, bei dem ein wasserlöslicher Schmelzklebstoff auf eine erste Papierlage aufgetragen und mindestens eine zweite Papierlage auf der Klebstoffseite der ersten Papierlage aufkaschiert wird, wobei die Löslichkeit des Schmelzklebstoffs in Wasser bei 20°C mindestens 3 Gew.-% beträgt und wobei eine 0,3 Gew.-%ige Lösung des Schmelzklebstoffes in Wasser einen oberen Trübungspunkt von mindestens 60°C aufweist.

Das erfindungsgemäße Verfahren eignet sich insbesondere für Papierverbunde, die einer Verwendung als Hygienepapier dienen sollen. Unter "Hygienepapier" werden im Rahmen der vorliegenden Erfindung überwiegend in Haushalt, in Gemeinschaftseinrichtungen und zur persönlichen Hygiene verwendete Papiersorten, z. B. Haushaltstücher (Küchenkrepp), Papierhandtücher, Papiertaschentücher, Papierservietten, Toilettenpapier, Kinderwindeln und dergleichen verstanden. Das erfindungsgemäße Verfahren eignet sich insbesondere für die Herstellung von Papierverbunden aus Tissue.

Unter "Tissue" wird ein besonders dünnes, weiches, überwiegend holzfreies Material, ggf. mit feiner (Trocken)Kreppung, verstanden. Das Material ist sehr saugfähig und weist in einer Einzellage in der Regel ein Flächengewicht von > 25 g/m² (vor der Kreppung) auf. Aus solchen Tissue-Verbunden, wie sie nach dem erfindungsgemäßen Verfahren erhältlich sind, werden hauptsächlich Toilettenpapier, Papiertaschentücher oder Kosmetiktücher hergestellt.

Unter "Schmelzklebstoffen" werden im Sinne der vorliegenden Erfindung Klebstoffe verstanden, die bei Raumtemperatur fest sowie wenigstens weitgehend wasser- und lösemittelfrei sind. Schmelzklebstoffe werden aus der Schmelze auf die zu verklebenden Papierlagen aufgetragen und binden beim Abkühlen unter Verfestigung physikalisch ab. Als Schmelzklebstoffe sind beispielsweise organische Polymere wie Polyester, Polyurethane, Polyamide, Polyalkylenoxide oder Polymerisate, beispielsweise Polyacrylate, geeignet. Die Schmelzklebstoffe müssen jedoch mindestens die oben genannten Voraussetzungen bezüglich der Wasserlöslichkeit erfüllen.

Die Begriffe "Polyacrylat" wie er im Rahmen des vorliegenden Textes benutzt wird, bezieht sich im folgenden sowohl auf Polymere oder Copolymere der Acrylsäure oder deren Derivate als auch auf Polymere oder Copolymere der Methacrylsäure oder deren Derivate.

Als Schmelzklebstoff im Rahmen der vorliegenden Erfindung geeignete Polyacrylate lassen sich herstellen, indem Acrylsäure oder Methacrylsäure oder Derivate von Acrylsäure oder Methacrylsäure, beispielsweise Ester der Acryl- oder Methacrylsäure mit mono- oder polyfunktionellen Alkoholen, jeweils alleine (im Falle der Acrylsäure oder Methacrylsäure) oder als Gemisch aus zwei oder mehr davon, auf bekannte Weise, beispielsweise radikalisch oder ionisch, polymerisiert werden. Die Polymeren oder Copolymeren sollten auf jeden Fall einen Anteil an freien Säuregruppen oder deren Salzen mit Alkali-, Erdalkali- oder Ammoniumionen aufweisen, der so hoch ist, daß das Polymere eine Wasserlöslichkeit von mindestens etwa 3 Gew.-% bei 20°C aufweist.

Beispielsweise können Rahmen der vorliegenden Erfindung als Schmelzklebstoff Polyacrylate in Form von Homopolymeren oder Copolymeren eingesetzt werden, wobei letztere neben den Acryl- oder Methacrylsäureanteilen oder deren Gemisch noch Styrol, Styrolsulfonsäure, Acrylnitril, Vinylacetat, Vinylpropionat, Vinylchlorid, Vinylidenchlorid und/oder Butadien aufweisen.

Gegebenenfalls können noch weitere Acrylate oder Methacrylate oder deren Gemisch mit einer oder mehreren funktionellen Gruppen bei der Polymerisation anwesend sein. Beispielsweise sind dies Maleinsäure, Itaconsäure, Butandioldiacrylat, Hexandioldiacrylat, Triethylenglycoldiacrylat, Tetraethylenglycoldiacrylat, Neopentylglycoldiacrylat, Trimethylolpropantriacrylat, 2-Hydroxyethylacrylat, 2-Hydroxyethylmethacrylat, Hydroxypropylacrylat, Propylenglycolmethacrylat, Butandiolmonoacrylat, Ethyldiglycolacrylat sowie sutfonsäuregruppentragende Monomere, beispielsweise 2-Acrylamido-2-methylpropansulfonsäure.

Die Polyacrylate weisen in einer bevorzugten Ausführungsform der Erfindung ein Molekulargewicht von etwa 3.000 bis etwa 50.000 auf.

Ebenfalls zum Einsatz als Schmelzklebstoff im Rahmen der vorliegenden Erfindung geeignet, sind Polyester mit einem Molekulargewicht von etwa 3.000 bis etwa 50.000. So können beispielsweise Polyester verwendet werden, die durch Umsetzung von niedermolekularen Alkoholen, insbesondere von Ethylenglykol, Diethylenglycol, Neopentylglycol, Hexandiol, Butandiol, Propylenglykol, Glycerin oder Trimethylolpropan mit entsprechenden mindestens difunktionellen Säuren entstehen. Ebenfalls als polyfunktionelle Alkohole zur Herstellung von Polyestern geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Geeignete Polyesterpolyole sind beispielsweise durch Polykondensation herstellbar. So können difunktionelle oder trifunktionelle Alkohole oder ein Gemisch aus zwei oder mehr davon, mit Dicarbonsäuren oder Tricarbonsäuren oder einem Gemisch aus zwei oder mehr davon, oder deren reaktiven Derivaten, zu Polyesterpolyolen kondensiert werden. Geeignete Dicarbonsäuren sind beispielsweise Bernsteinsäure und ihrer höheren Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Im Rahmen der Erfindung besonders geeignet sind Polyesterpolyole aus mindestens einer der genannten Dicarbonsäuren und Glycerin, welche einen Restgehalt an OH-Gruppen aufweisen. Besonders geeignete Alkohole sind Hexandiol, Ethylenglycol, Diethylenglycol oder Neopentylglycol oder Gemische aus zwei oder mehr davon. Besonders geeignete Säuren sind Isophthalsäure oder Adipinsäure oder deren Gemisch.

Weiterhin als Polyolkomponente zur Herstellung der Polyester einsetzbare Polyole sind beispielsweise Diethylenglykol oder höhere Polyethylenglykole mit einem Molekulargewicht (Mₙ) von etwa 100 bis etwa 22.000, beispielsweise etwa 200 bis etwa 15.000 oder etwa 300 bis etwa 10.000, insbesondere etwa 500 bis etwa 2.000.

Im Rahmen der vorliegenden Erfindung als Schmelzklebstoff einsetzbare Polyester umfassen insbesondere die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (sofern existent) auch die entsprechenden Polycarbonsäureanhydride oder entsprechende Polycarbonsäureester mit Alkoholen mit vorzugsweise 1 bis 8 C-Atomen eingesetzt werden. Die Polycarbonsäuren können aliphatisch, cycloaliphatisch, aromatisch und/oder heterocyclisch sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein.

Die Polyester können beispielsweise Carboxylendgruppen aufweisen. Aus Lactonen, beispielsweise ε-Caprolacton oder Hydroxycarbonsäuren, beispielsweise ω-Hydroxycapronsäure, erhältliche Polyester, können ebenfalls mindestens anteilsweise eingesetzt werden.

In jedem Fall müssen die Polyester jedoch eine Wasserlöslichkeit von mindestens 3 Gew.-% bei 20°C aufweisen. Die Wasserlöslichkeit kann beispielsweise durch Verwendung geeigneter wasserlöslicher Comonomeren bei der Polyesterherstellung erreicht werden. Zur Einstellung der Wasserlöslichkeit der Polyester empfiehlt sich beispielsweise die Verwendung entsprechender sulfonierter Polycarbonsäuren, beispielsweise sulfonierter Phthalsäure, Isophthalsäure oder Terephthalsäure, oder die Verwendung wasserlöslicher Polyetherpolyole wie Polyethylenglykol mit einem Molekulargewicht (Mₙ) von mindestens etwa 100, bei der Polykondensation.

Als Schmelzklebstoff eignen sich weiterhin beispielsweise Polyalkylenglykole mit einem Molekulargewicht (Mₙ) von mindestens etwa 1.000, deren Löslichkeit in Wasser bei 20°C mindestens etwa 3 Gew.-% beträgt.

Solche Polyalkylenglykole werden in der Regel durch katalytisch unterstützte ringöffnende Polymerisation von Alkylenglykolen hergestellt.

Üblicherweise wird ausgehend von einem sogenannten Startermolekül polymerisiert. Als Startermoleküle eignen sich grundsätzlich alle Verbindungen die, gegebenenfalls in Anwesenheit eines geeigneten Katalysators, zur Ringöffnung von Epoxidringen in der Lage sind. Beispielsweise sind dies primäre, sekundäre oder tertiäre Amine, primäre, sekundäre oder tertiäre Alkohole, Thiole oder Carbonsäuren.

Die Polymerisation verläuft in der Regel unter basischer Katalyse. Im Rahmen der vorliegenden Erfindung werden vorzugsweise Polyalkylenglykole eingesetzt, wie sie durch Polymerisation von Ethylenoxid, gegebenenfalls im Gemisch mit C₃₋₁₂-Alkylenoxiden, erhältlich sind. Der Anteil an höheren Alkylenoxiden im Polyalkylenglykol darf jedoch maximal so bemessen sein, daß die Löslichkeit in Wasser (im Rahmen des vorliegenden Textes auch: Wasserlöslichkeit) bei 20°C mindestens etwa 3 Gew.-% beträgt. Geeignet sind beispielsweise Polyethylenglykole mit einem Anteil an C₃- oder C₄-Einheiten, oder beidem, wie sie durch Copolymerisation von Ethylenoxid mit Propylenoxid oder Butylenoxid oder deren Gemisch erhältlich sind. Vorzugsweise wird im Rahmen der vorliegenden Erfindung jedoch Polyethylenoxid eingesetzt, wie es durch Polymerisation von Ethylenoxid erhältlich ist.

In einer bevorzugten Ausführungsform der Erfindung werden als Schmelzklebstoff Polyalkylenglykole eingesetzt, die unter Verwendung von primären, sekundären oder tertiären Alkoholen oder Gemischen aus zwei oder mehr davon als Startmoleküle hergestellt wurden.

Als Startmoleküle sind grundsätzlich alle mono- oder polyfunktionellen Alkohole oder deren Gemische geeignet, vorzugsweise werden im Rahmen der vorliegenden Erfindung jedoch Polyalkylenglykole eingesetzt, die unter Verwendung eines zweioder dreiwertigen Alkohols, beispielsweise Ethylenglykol, Propylenglykol, Butylenglykol, Pentandiol, Hexandiol, Heptandiol, Octandiol sowie deren höheren Homologen, Neopentylglykol, Glycerin, Trimethylolpropan, Triethylolpropan, Pentaerythrit, Glucose, Sorbit, Mannit oder eines Gemischs aus zwei oder mehr davon als Startmolekül, hergestellt wurden.

Die Untergrenze des Molekulargewichts der als Schmelzklebstoff im Rahmen der vorliegenden Erfindung einsetzbaren Polyalkylenglykole wird durch die klebetechnischen Eigenschaften des Polyalkylenglykols bestimmt. Es ist in jedem Fall erforderlich, daß das Molekulargewicht so hoch ist, daß ausreichende Adhäsion und Kohäsion des Schmelzklebstoffs gegeben sind. Weiterhin sollte das Molekulargewicht so hoch sein, daß die Polyalkylenglykole keine haftklebrigen Eigenschaften mehr aufweisen.

Die im Rahmen des erfindungsgemäßen Verfahrens als Schmelzklebstoff einsetzbaren Polyalkylenglykole weisen daher in der Regel ein Molekulargewicht (Mₙ) von mindestens etwa 1.000, beispielsweise mindestens etwa 3.000 und insbesondere mindestens etwa 6.000 auf.

Die Obergrenze für das Molekulargewicht wird in der Regel durch die Verarbeitung als Schmelzklebstoff und durch die Wasserlöslichkeit bestimmt. Dadurch ergibt es sich, daß die Obergrenze des Molekulargewichts so angelegt sein sollte, daß ein problemloses Aufwalzen oder Versprühen des geschmolzenen Polyalkylenoxids durch übliche Düsen im Rahmen üblicher Auftragstechniken möglich ist. Weiterhin sollte das Molekulargewicht des Polyalkylenoxids nur so hoch sein, daß die geforderte Wasserlöslichkeit von etwa 3 Gew.-% eingehalten wird. Die Obergrenze des Molekulargewichts liegt daher beispielsweise bei etwa 100.000, insbesondere bei bis zu etwa 50.000.
Bevorzugt wird als Schmelzklebstoff ein Polyalkylenglykol mit einem Molekulargewicht (Mₙ) von 1000 bis 100.000 eingesetzt.

Die Polyalkylenglykole können einzeln, d. h. als Polyadditionsprodukt mit üblicherweise bei basisch katalysierten Additionen von Alkylenoxiden an Wasser oder andere Startermoleküle entstehenden Molekulargewichtsverteilungen eingesetzt werden. Es ist jedoch ebenfalls möglich, Gemische verschiedener Polyalkylenglykole mit unterschiedlichen Molekulargewichtsverteilungen einzusetzen. Weiterhin ist es möglich Polyalkylenglykole einzusetzen, die durch Addition nur einer Alkylenoxidverbindung an ein Startermolekül entstehen. Es ist jedoch ebenfalls möglich Polyalkylenglykole einzusetzen, die durch Addition verschiedener Alkylenoxide erhältlich sind. Es kann sich dabei sowohl um Block-Copolymere als auch um statistische Copolymere handeln.

Als Schmelzklebstoff im Rahmen der vorliegenden Erfindung können weiterhin Polyurethane mit einem Molekulargewicht (Mₙ) von mindestens etwa 2.000, beispielsweise etwa 5.000 oder mehr, die eine Wasserlöslichkeit bei 20°C von mindestens 3 Gew.-% aufweisen, eingesetzt werden. Als Schmelzklebstoffe sind sowohl ionische als auch nichtionische, wasserlösliche Polyurethane geeignet.

Polyurethane, wie sie im Rahmen der vorliegenden Erfindung als Schmelzklebstoff einsetzbar sind, werden üblicherweise durch Umsetzung von mindestens einem Polyisocyanat, vorzugsweise einem Diisocyanat, und einer Polyolkomponente, die vorzugsweise überwiegend aus Diolen besteht, hergestellt. Die Polyolkomponente kann dabei nur ein Polyol enthalten, es kann jedoch auch ein Gemisch aus zwei oder mehr verschiedenen Polyolen als Polyolkomponente eingesetzt werden. Als Polyolkomponente oder zumindest als Bestandteil der Polyolkomponente sind beispielsweise Polyalkylenoxide, insbesondere Polyethylenoxid, besonders geeignet.

Der Begriff "ionisch" bedeutet, daß das Polyurethan ionische oder zumindest im Rahmen einer Säure-Base Reaktion ionisierbare Gruppen als Löslichkeitsvermittier aufweist, beispielsweise Carboxylat-, Sulfonat, Phosphonat- oder Ammonium-Gruppen.

Der Begriff "nichtionisch" bedeutet entsprechend, daß das Polyurethan keine ionischen Gruppen als emulgierende Gruppen aufweist, also keine Carboxylat-, Sulfonat, Phosphonat- oder Ammonium-Gruppen. Die Wasserlöslichkeit beruht vielmehr auf den hydrophilen nichtionischen Gruppen des Polyoxyethylens - [CH₂-CH₂-O-]ₙ -. Diese Struktureinheiten leiten sich insbesondere von dem bevorzugt als Polyolkomponente eingesetzten Polyethylenoxid ab. Unter Polyethylenoxid sind aber nicht nur Polyadditionsprodukte von Ethylenoxid an Wasser oder Ethylenglykol als Startmolekül zu verstehen, sondern auch Polyadditionen von Ethylenoxid an andere zweiwertige Alkohole, z. B. Butandiol, Hexandiol oder 4,4'-Dihydroxydiphenylpropan. Es können auch Gemische aus zwei oder mehr verschiedenen Polyethylenoxiden eingesetzt werden, die sich beispielsweise im mittleren Molekulargewicht M_{w} oder Mₙ oder in beidem unterscheiden. Es können auch Copolymere von Ethylenoxid mit höheren Alkylenoxiden, z. B. mit Propylenoxid, als Polyolkomponente verwendet werden, sofern sie genügend wasserlöslich sind, d. h., mehr als etwa 3 g in etwa 100 g Wasser bei etwa 20°C über etwa 6 Monate gelöst bleiben.

Das Polyethylenoxid in der Polyolkomponente kann bis zu 10, vorzugsweise bis zu höchstens 5, insbesondere bis zu höchstens 2 Gew.-% durch andere Diole ersetzt werden, die einen hydrophoben Rest mit einer Wasserlöslichkeit von höchstens 2 g/100 g Wasser enthalten. Bei dem hydrophoben Rest handelt es sich insbesondere um aliphatische oder alicyclische Strukturen mit 2 bis 44, insbesondere 6 bis 36 C-Atomen. Die Reste können auch aromatische Strukturen enthalten. Bevorzugt sind Diole mit mindestens einer primären OH-Gruppe, insbesondere 1,2- oder α,ω-Diole. Aber auch Diole mit vicinaler Stellung der OH-Gruppen sind geeignet.

Das Polyethylenoxid in der Polyolkomponente weist vorzugsweise ein Molekulargewicht (Mₙ) von etwa 200 bis etwa 20.000 auf, insbesondere etwa 1.000 bis etwa 15.000, beispielsweise etwa 1.550, 3.000, 6.000 oder 12.000.

Ferner können bis 10, vorzugsweise 0,5 bis 5% des Polyethylenglykols durch hydrophobe homopolymere Polyalkylenglykole ersetzt werden, wobei die Alkylengruppe mehr als 2, vorzugsweise 3 oder 4 C-Atome hat. Ihre Molekulargewichte betragen insbesondere 150 bis 10.000 g/mol.

Konkrete Beispiele für die hydrophoben Diole mit reinen CH-Resten und mit Ethergruppierungen sind Polypropylenglykol (PPG), Polybutylenglykol, Polytetrahydrofuran, Polybutadiendiol, hydroxylterminierte Ethylen-Butylen-Copolymere (z.B. KRATON LIQUID Polymer L-2203), hydriertes Polybutadiendiol und Alkandiole mit 4 bis 44 C-Atomen. Bevorzugte hydrophobe Diole sind Polypropylenglykol, Polyetrahydrofuran mit einem Molekulargewicht von 150 bis 10.000, insbesondere 200 bis 4.500, besonders bevorzugt 250 bis 1.000, sowie 1,10-Decandiol, 1,12-Dodecandiol, 1,12-Octadecandiol, Dimerfettsäurediol, 1,2-Octandiol, 1,2-Dodecandiol, 1,2-Hexadecandiol, 1,2-Octadecandiol, 1,2-Tetradecandiol, 4,4-Isopropylidendicyclohexanol und deren Isomerengemische, 4,8-Bis(hydroxymethyl)tricyclo[5,2,1,0^{2,6}]decane und deren Isomerengemische, 1,4:3,6-Dianhydro-D-mannitol, 1,4:3,6-Dianhydro-D-sorbitol, 1,16-Hexadecandiol, Bisphenol-A sowie deren Prop- oder Ethoxylierungsprodukte oder deren Gemische, insbesondere mit bis zu 30 EO-Einheiten, und schließlich Monofettsäureester des Glycerins mit bis zu 22 C-Atomen enthaltenden Fettsäuren, z.B. Glycerinmonoester der Behensäure, Ölsäure, Stearinsäure, Myristinsäure. Natürlich können auch Mischungen aus zwei oder mehr der genannten hydrophoben Diole eingesetzt werden.

Das Polyethylenglykol kann ferner in einem Ausmaß von 0 bis 5, insbesondere 0,2 bis 2% durch höherfunktionelle Alkohole, insbesondere durch Triole ersetzt werden, z.B. durch Glycerin, Trimethylolpropan, Triethanolamin oder deren ethoxylierte oder propoxylierte Varianten. Auch Pentaerythrit ist brauchbar. Möglich sind auch ethoxylierte oder propoxylierte Varianten von Aminen oder Aminoalkoholen, z.B. ausgehend von Ethylendiamin, Diethylentriamin, und deren höheren Homologen, beispielsweise Aminophenol, N-2-Aminoethylpiperazin.

Um besonders hochmolekulare Polyurethane zu erhalten, sollten möglichst reine Diole eingesetzt werden. Zu diesem Zweck sollte der Gehalt an Alkali- und Erdalkalimetallionen unter 500 ppm, insbesondere unter 150 ppm und vorzugsweise unter 10 ppm liegen. Außerdem sollte der Wassergehalt unter 0,5, insbesondere unter 0,1, bevorzugt unter 0,05 Gew.-% nach K. Fischer liegen.

Neben den Diolen der Polyolkomponente sind Diisocyanate wesentliche Bausteine des als Schmelzklebstoff einsetzbaren Polyurethans. Dabei handelt es sich um Verbindungen der allgemeinen Struktur O=C=N-X-N=C=O, wobei X ein alipathischer, alicyclischer oder aromatischer Rest ist, vorzugsweise ein aliphatischer oder alicyclischer Rest mit 4 bis 18 C-Atomen.

Beispielsweise seien als geeignete Isocyanate 1,5-Naphthylendiisocyanat, 4,4'-Diphenylmethandiisocyanat (MDI), hydriertes MDI (H₁₂-MDI), Xylylendiisocyanat (XDI), Tetramethylxylylendiisocyanat (TMXDI), 4,4'-Diphenyldimethyimethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Totuytendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Diisocyanate mit reaktionsfähigen Halogenatomen wie 1-Chlormethylphenyl-2,4-diisocyanat, 1-Brommethylphenyl-2,6-diisocyanat oder 3,3-Bischlormethylether-4,4'-diphenyldiisocyanat genannt. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat. Besonders geeignet sind: Tetramethylen-, Hexamethylen-, Undecan-, Dodecamethylen-, 2,2,4-Trimethylhexan-, 1,3-Cyclohexan-, 1,4-Cyclohexan-, 1,3- bzw. 1,4-Tetramethylxylol-, Isophoron-, 4,4-Dicyclohexylmethan- und Lysinester-di-isocyanat. Ganz besonders bevorzugt ist das Tetramethylxylylendiisocyanat (TMXDI), insbesondere das von der Fa. Cyanamid erhältliche m-TMXDI.

Zur weiteren Erhöhung des Molekulargewichts kann beispielsweise auf bekannte Weise eine Kettenverlängerung vorgenommen werden. Hierzu werden zunächst Präpolymere mit überschüssigem Diisocyanat hergestellt, die dann anschließend mit kurzkettigen Aminoalkoholen, Diolen, Diaminen oder mit Wasser unter Erhöhung des Molekulargewichts verlängert werden.

Hierzu werden zunächst Präpolymere mit überschüssigem Diisocyanat hergestellt, die dann anschließend mit kurzkettigen Diolen oder Diaminen oder mit Wasser verlängert werden. Als Kettenverlängerer seien konkret genannt:
- gesättigte und ungesättigte Glykole wie Ethylenglykol oder Kondensate des Ethylenglykols, Butandiol-1,3, Butandiol-1,4, 2-Buten-1,4-diol, 2-Butin-1,4-diol, Propandiol-1,2, Propandiol-1,3, Neopentylglykol, Hexandiol, Bishydroxymethylcyclohexan, Dioxyethoxyhydrochinon, Terephthalsäurebisglykolester, Bernsteinsäure-di-2-hydroxyethylamid, Bernsteinsäuredi-N-methyl-(2-hydroxyethyl)amid, 1,4-Di(2-hydroxymethylmercapto)-2,3,5,6-tetrachlorbenzol, 2-Methylen-propandiol-(1,3), 2-Methylpropandiol-(1,3), 3-Pyrrolidino-1,2-propandiol, 2-Methylenpentandiol-2,4, 3-Alkoxy-1,2-propandiol, 2-Ethylhexan-1,3-diol, 2,2-Dimethylpropandiol-1,3, 1,5-Pentandiol, 2,5-Dimethyl-2,5-hexandiol, 3-Phenoxy-1,2-propandiol, 3-Benzyloxy-1,2-propandiol, 2,3-Dimethyl-2,3-butandiol, 3-(4-Methoxyphenoxy)-1,2-propandiol und Hydroxymethylbenzylalkohol;
- aliphatische, cycloaliphatische und aromatische Diamine wie Ethylendiamin, Hexamethylendiamin, 1,4-Cyclohexytendiamin, Piperazin, N-Methylpropylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins;
- weiterhin auch Carbohydrazide oder Hydrazide von Dicarbonsäuren;
- Aminoalkohole wie Ethanolamin, Propanolamin, Butanolamin, N-Methylethanolamin, N-Methyl-isopropanolamin, Diethanolamin, Triethanolamin sowie höhere Di- oder Tri(alkanolamine);
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren sowie die isomeren Mono- und Diaminonaphthoesäuren.

Vorzugsweise wird das Polyurethan jedoch in einem einstufigen Verfahren hergestellt. Dabei werden beispielsweise zunächst alle Ausgangsstoffe in Gegenwart eines organischen Lösemittels bei einem Wassergehalt von weniger als 0,5 Gew.-% gemischt. Die Mischung wird für ca. 1 bis 30 Stunden auf 60 bis 200 °C, insbesondere auf 80 bis 180 °C und vorzugsweise auf 100 bis 150 °C erhitzt.

Die Reaktionszeit kann durch Anwesenheit von Katalysatoren verkürzt werden.

Insbesondere sind tertiäre Amine geeignet, z.B. Triethylamin, 1,4-Diazabicyclo[2,2,2]octan (= DABCO) Dimethylbenzylamin, Bis-dimethytaminoethylether und Bis-Methytaminomethylphenol. Besonders geeignet sind 1-Methylimidazol, 2-Methyl-1-viny(imidazol, 1-Allylimidazol, 1-Phenylimidazol, 1,2,4,5-Tetramethylimidazol, 1-(3-Aminopropyl)imidazol, Pyrimidazol, 4-Dimethylaminopyridin, 4-Pyrrolidinopyridin, 4-Morpholino-pyridin, 4-Methylpyridin.

Es können auch zinnorganische Verbindungen als Katalysatoren eingesetzt werden. Darunter werden Verbindungen verstanden, die sowohl Zinn als auch einen organischen Rest enthalten, insbesondere Verbindungen, die eine oder mehrere Sn-C-Bindungen enthalten. Zu den zinnorganischen Verbindungen im weiteren Sinne zählen z.B. Salze wie Zinnoctoat und Zinnstearat. Zu den Zinnverbindungen im engeren Sinne gehören vor allem Verbindungen des vierwertigen Zinns der allgemeinen Formel Rₙ₊₁SnX₃₋ₙ, wobei n für eine Zahl von 0 bis 2 steht, R für eine Alkylgruppe oder eine Arylgruppe oder beides steht und X schließlich für eine Sauerstoff-, Schwefel- oder Stickstoff-Verbindung oder ein Gemisch aus zwei oder mehr davon steht Zweckmäßigerweise enthält R mindestens 4 C-Atome, insbesondere mindestens 8. Die Obergrenze liegt in der Regel bei 12 C-Atomen. Vorzugsweise ist X eine Sauerstoffverbindung, also ein zinnorganische Oxid, Hydroxid, Carboxylat oder ein Ester einer anorganischen Säure. X kann aber auch eine Schwefelverbindung sein, also ein zinnorganisches Sulfid, Thiolat oder ein Thiosäureester. Bei den Sn-S-Verbindungen sind vor allem Thioglykolsäureester geeignet, z.B. Verbindungen mit folgenden Resten:

- S-CH₂-CH₂-CO-O-(CH₂)₁₀-CH₃

oder

- S-CH₂-CH₂-CO-O-CH₂-CH(C₂H₅)-CH₂-CH₂-CH₂-CH₃.

Derartige Verbindungen erfüllen eine weitere Auswahlregel: Das Molekulargewicht der zinnorganischen Verbindung soll in einer bevorzugten Ausführungsform der Erfindung über 250, insbesondere über 600 liegen.

Eine weitere bevorzugte Verbindungsklasse stellen die Dialkyl-Zinn-(IV)-Carboxylate dar (X=O-CO-R¹). Die Carbonsäuren haben 2, vorzugsweise wenigstens 10, insbesondere 14 bis 32 C-Atome. Es können auch Dicarbonsäuren eingesetzt werden. Als Säuren sind beispielsweise Adipinsäure, Maleinsäure, Fumarsäure, Terephthalsäure, Phenylessigsäure, Benzoesäure, Essigsäure, Propionsäure sowie insbesondere Capryl-, Caprin-, Laurin-, Myristin-, Palmitin- und Stearinsäure geeignet. Besonders geeignet sind beispielsweise Dibutylzinn-diacetat und -dilaurat sowie Dioctylzinn-diacetat und -dilaurat.

Auch Zinnoxide und -sulfide sowie -thiolate sind im Rahmen der vorliegenden Erfindung geeignet. Konkrete Verbindungen sind: Bis(tributylzinn)oxid, Dibutylzinndidodecylthiolat, Dioctylzinndioctylhiolat, Dibutylzinn-bis(thioglykolsäure-2-ethyl-hexylester), Octylzinn-tris-(thioglykolsäure-2-ethyl-hexylester), Dioctylzinnbis(thioethylenglykol-2-ethylhexoat), Dibutylzinn-bis(thioethylenglykollaurat), Dibutylzinnsulfid, Dioctylzinnsulfid, Bis(tributylzinn)sulfid, Dibutylzinnbis(thioglykolsäure-2-ethylhexylester), Dioctylzinn-bis(thioethylenglykol-2-ethylhexoat), Trioctylzinnthioethylenglykol-2-ethylhexoat sowie Dioctylzinnbis(thiolatoessigsäure-2-ethylyhexylester), Bis(S,S-methoxycarbonyl ethyl)zinnbis(thiolatoessigsäure-2-ethylhexylester), Bis(S,S-acetyl-ethyl)zinnbis(thiolatoessigsäure-2-ethyl-hexylester), Zinn(II)octylhiolat und Zinn(II)-thioethylenglykol-2-ethylhexoat.

Außerdem seien noch genannt: Dibutylzinndiethylat, Dihexylzinndihexylat, Dibutylzinndiacetylacetonat, Dibutylzinndiethylacetylacetat, Bis(butyldichlorzinn)oxid, Bis(dibutylchlorzinn)sulfid, Zinn(II)phenolat, Zinn(II)-acetylacetonat, sowie weitere α-Dicarbonylverbindungen wie Acetylaceton, Dibenzoylmethan, Benzoylaceton, Acetessigsäureethylester, Acetessigsäure-n-propylester, α,α'-Diphenylacetessigsäureethylester und Dehydroacetessigsäure.

Der Katalysator wird vorzugsweise dem Polyol zugesetzt. Seine Menge richtet sich nach seiner Aktivität und den Reaktionsbedingungen. Sie liegt vorzugsweise im Bereich von 0,001 bis 0,5 Gew.-%, bezogen auf das Polyol.

Vorzugsweise wird jedoch ohne Katalysator gearbeitet. Auch das Lösemittel wird zweckmäßigerweise weggelassen. Unter "Lösemitteln" werden im Rahmen des vorliegenden Textes inerte organische flüssige Stoffe mit einem Siedepunkt von weniger als 200°C bei Normaldruck ( 1 bar) verstanden.

Die Umsetzung wird vorzugsweise so vorgenommen, daß das Verhältnis von OH-Gruppen in der Polyolkomponente zu NCO-Gruppen im Polyisocyanat etwa 1,0 bis etwa 2, 0, insbesondere etwa 1,05 bis 1,8, beispielsweise etwa 1,1 bis 1,7 oder etwa 1,3 bis 1,6, beträgt.

Eine Möglichkeit zur Einführung von ionenbildenden Strukturelementen ist die Reaktion von OH-terminierten Polyurethanoligomeren mit Dicarbonsäureanhydriden. Diese können insgesamt 2 bis 44, vorzugsweise 2 bis 12 C-Atome zwischen den Bisacylgruppen wie Alkylen-, Alkenylen- oder Arylen-Gruppierung enthalten. Beispielsweise sind Bernsteinsäureanhydrid, Glutarsäureanhydrid, 1,2,3,6-Tetrahydrophthalsäureanhydrid und dessen Isomere, Phthalsäureanhydrid, Trimellithsäureanhydrid, 7-Oxabicyclo[2,2,1]hept-5-en-2,3-dicarbonsäureanhydrid, 5-Norbornen-2,3-dicarbonsäureanhydrid und deren Isomere, Diglykolsäureanhydrid, Maleinsäureanhydrid, Dimethylmaleinsäureanhydrid, Citraconsäureanhydrid, Itaconsäureanhydrid, Alkenylbernsteinsäureanhydride, vorzugsweise solche deren Alkenylgruppen mehr als 2 C-Atome, insbesondere mehr als 5, besonders bevorzugt mehr als 7 C-Atome besitzen, geeignet. Konkret genannt seien: n-Octenylbernsteinsäureanhydrid, n-Dodecenylbernsteinsäureanhydrid, Tetrapropenylbernsteinsäureanhydrid, n-Hexadecenylbernsteinsäureanhydrid und n-Octadenylbernsteinsäureanhydrid. Der Alkenylrest kann linear oder verzweigt aufgebaut sein. Darüber hinaus können auch Mischungen von Alkenylgruppen mit verschiedener Anzahl von C-Atomen vorkommen. Auch Gemische mehrerer Anhydride sind möglich, bevorzugt sind jedoch cyclische Anhydride.

Es ist jedoch auch möglich, einen molaren Überschuß an Isocyanaten einzusetzen, wobei NCO-terminierte Oligomere entstehen.

Im allgemeinen sind zwar NCO-Gruppen im Endprodukt unerwünscht. Sie können jedoch verwendet werden, um z.B. hydrophobe oder ionische Strukturelemente einzuführen.

Hydrophobe Strukturelemente können beispielsweise durch Reaktion von NCO-terminierten Oligomeren mit Monoolen oder monofunktionellen Aminen mit ≥ 2 C-Atomen, insbesondere ≥ 6, ≥ 10 oder ≥ 16 C-Atomen erhalten werden. Konkret seien genannt: Poly-Ethylen/Butylen mit 1 OH-Gruppe, z.B. mit einem OH-Äquivalentgewicht von 3600 (Kraton L 1203) sowie 1-Hexanol, 1-Heptanol, 1-Octanol, 1-Nonanol, 1-Decanol, 1-Undecanol, 10-Undecen-1-ol, 1-Dodecanol, 1-Tridecanol, 1-Tetradecanol, 1-Pentadecanol, 1-Hexadecanol, 1-Heptadecanol, 1-Octadecanol, 9-cis-Octadecen-1-ol, 9-trans-Octadecen-1-ol, 9-cis-Octadecen-1,12-diol, all-cis-9,12-Octadecadien-1-ol, all-cis-9,12,15-Octadecatrien-1-ol, 1-Nonadecanol, 1-Eicosanol, 9-cis-Eicosen-1-ol, 5,8,11,14-Eicosatetraen-1-ol, 1-Heneicosanol, 1-Docosanol, 13-cis-Docosen-1-ol, 13-trans-Docosen-1-ol. Auch die entsprechenden Fettamine sind als hydrophobierende Strukturelemente möglich.

Eine weitere Möglichkeit zur Einführung ionenbildender Strukturen ist schließlich die Reaktion NCO-terminierter Oligomerer mit Hydroxycarbonsäuren oder Aminocarbonsäuren mit Alkylen-, Alkenylen- oder Arylen-Gruppierungen wie bei den Dicarbonsäureanhydriden. Als Beispiele seien genannt: Glykolsäure, Milchsäure, Capronsäure und Mandelsäure sowie Aminocapronsäure, Aminododecansäure, Glycin, Alanin und Phenylalanin.

Bevorzugt wird als Schmelzklebstoff mindestens ein nichtionisches Polyurethan mit einem Molekulargewicht (Mₙ) von mindestens 2000 oder ein Polyester mit einem Molekulargewicht von mindestens etwa 3000 eingesetzt.

In einer bevorzugten Ausführungsform der Erfindung wird als Schmelzklebstoff ein nichtionisches Polyurethan mit einem Molekulargewicht (Mₙ) von mindestens etwa 2.000 eingesetzt, insbesondere ein nichtionischen Polyurethan, das durch Umsetzung mindestens eines Polyisocyanats mit mindestens einem Polyalkylenglykol mit einem Molekulargewicht von mindestens 1.000 erhältlich ist.

Insbesondere wird als Schmelzklebstoff mindestens ein nichtionisches Polyurethan mit einem Molekulargewicht von mindestens 2000 eingesetzt, welches erhältlich ist durch Umsetzung von mindestens einem Polyisocyanat mit mindestens einem Polyalkylenglykol mit einem Molekulargewicht von mindestens 1550.

Der Schmelzklebstoff kann weitere Zusatzstoffe enthalten, beispielsweise Weichmacher, rheologische Additive, Antioxidantien, UV-Stabilisatoren, Farbstoffe, Tackifierharze oder Pigmente (Füllstoff).

Als Tackifier werden beispielsweise Kohlenwasserstoffharze eingesetzt, insbesondere C5- oder C9-Harze oder mit C5-Harzen modifizierte C9-Harze. Weiterhin zum Einsatz als Tackifier geeignet sind Harze auf Basis reiner Kohlenwasserstoffmonomerer, beispielsweise Harze wie sie aus der Polymerisation von Mischungen aus Styrol, α-Methylstyrol und Vinyltoluol erhältlich sind. Die genannten Kohlenwasserstoffharze können teilhydriert oder vollhydriert sein.

Ebenfalls zum Einsatz als Tackifier geeignet sind Naturharze wie Balsamharz wie es beispielsweise aus Bäumen gewonnen wird oder Tallharz, das bei der Papierherstellung anfällt. Die Naturharze können in der oben genannten Form als Tackifier eingesetzt werden, es ist jedoch ebenso möglich, die genannten Harze nach Veresterung mit entsprechenden polyfunktionellen Alkoholen als Pentaerythritester, Glycerinester, Diethylenglykolester, Triethylenglykolester oder Methylester einzusetzen.

Ebenso als Tackifier geeignet sind die Polyterpenharze. Terpene fallen bei der Trennung von Harzsäuren von deren natürlichen Lösemitteln an und lassen sich zu Polyterpenharzen polymerisieren. Ebenfalls zum Einsatz als Tackifier geeignet sind die durch Phenolmodifizierung aus Polyterpenharzen gewinnbaren Terpenphenolharze.

Die Zusatzstoffe können einzeln oder als Gemisch aus zwei oder mehr der genannten Substanzen im Schmelzklebstoff vorliegen. Die Menge der Zusatzstoffe sollte etwa 20 Gew.-% (bezogen auf den Gesamten Schmelzklebstoff) nicht überschreiten. Geeignet sind beispielsweise Mengen von etwa 0,1 bis etwa 15 Gew.-%, oder etwa 1 bis etwa 10 Gew.-% in einer bevorzugten Ausführungsform der Erfindung werden beispielsweise etwa 2, 3, 4, 5, 7 oder 9 Gew.-% Zusatzstoffe eingesetzt.

Vorteilhafterweise weist das Polyalkylenglykol eine Schmelzviskosität von nicht mehr als 20.000 mPas (Brookfield Thermasel, Spindel 27, 180 °C) auf. In einer bevorzugten Ausführungsform liegt jedoch die Schmelzviskosität unter diesem Wert, beispielsweise bei etwa 1.000 mPas bis etwa 10.000 mPas, beispielsweise etwa 2.000 bis etwa 8.000 mPas. Gute Ergebnisse lassen sich beispielsweise bei etwa 5.000 bis 6.000 mPas bei einer Schmelztemperatur von etwa 150 °C (Brookfield Thermosel, Spindel 27) erzielen.

Die beim erfindungsgemäßen Verfahren zur Anwendung kommenden Schmelzklebstoffe sollen in der Regel eine Viskosität aufweisen die es erlaubt die Schmelzklebstoffe im Rahmen üblicher Auftragsverfahren einzusetzen. Bevorzugt weisen die Schmelzklebstoffe daher eine Schmelzviskosität (Brookfield Thermosell, Spindel 27) auf, die in einem Bereich von etwa 400 mPas bei 100°C bis zu etwa 20.000 mPas bei etwa 180°C liegt. In einer bevorzugten Ausführungsform der vorliegenden Erfindung weisen die Schmelzklebstoffe eine im oben genannten Bereich liegende Viskosität in einem Temperaturbereich von etwa 120°C bis etwa 150°C auf. Geeignete Viskositäten sind beispielsweise etwa 1.000 bis etwa 15.000 mPas oder etwa 3.000 bis etwa 8.000 mPas.

Das erfindungsgemäße Verfahren zur Herstellung mindestens zweilagiger Papierverbunde beinhaltet in der Regel mindestens einen Verfahrensschritt, bei dem Schmelzklebstoff auf eine erste Papierlage aufgetragen wird und in einem bestimmten zeitlichen und räumlichen Abstand eine zweite Papierlage auf die erste Papierlage kaschiert wird. Damit eine ausreichende Haftung zwischen der ersten und der zweiten Papierlage entsteht, muß der Schmelzklebstoff zum Zeitpunkt des Aufkaschierens der zweiten Papierlage noch ausreichend klebrig sein, d.h., er darf noch nicht physikalisch ausgehärtet sein. Die Zeit nach dem Auftrag des Schmelzklebstoffs, in welcher der Klebstoff ausreichende Klebrigkeit zum Aufkaschieren einer zweiten Papierlage besitzt, wird im folgenden "offene Zeit" genannt. Unter "ausreichend Klebrig" wird eine Klebrigkeit verstanden, die eine Verbindung zwischen den Papierlagen erzeugt, die eine Schälkraft von mehr als 0 N/cm aufweist.

Bei üblichen Maschinengeschwindigkeiten von beispielsweise bis zu 600 m/min reicht es im Allgemeinen aus, wenn der Schmelzklebstoff eine offene Zeit von etwa 0,1 bis etwa 1 Sekunden, beispielsweise etwa 0,2 bis etwa 0,5 Sekunden, aufweist. In einer bevorzugten Ausführungsform der Erfindung weist der Schmelzklebstoff eine offene Zeit von mindestens 0,2 Sekunden auf. Wenn der Schmelzklebstoff erst dann eingesetzt werden soll wenn die volle Maschinengeschwindigkeit erreicht ist, ist eine offene Zeit in der oben genannten Größenordnung in der Regel ausreichend. Soll der Schmelzklebstoff jedoch beispielsweise schon während der Anlaufphase der Maschine zu einer Verbindung von mindestens zwei Papierlagen führen, so sollte die offene Zeit einen größeren Zeitraum als den oben angegebenen umfassen. Vorteilhaft sind dann beispielsweise offene Zeiten von etwa 1 bis etwa 10 Sekunden, beispielsweise etwa 2 bis etwa 8 oder etwa 4 bis etwa 6 Sekunden.

In einer bevorzugten Ausführungsform der Erfindung weist der Schmelzklebstoff keine haftklebrigen Eigenschaften auf, d.h., die Oberfläche des Schmelzklebstoffs ist nach dem Ende der offenen Zeit nicht mehr klebrig.

Der im Rahmen des erfindungsgemäßen Verfahrens einzusetzende Schmelzklebstoff ist wasserlöslich, so daß sich bei 20°C mindestens eine Menge von etwa 3 Gew.-%, vollständig in Wasser löst. Unter "vollständigem Lösen" wird die Ausbildung einer im eventuell folgenden Recyclingprozeß nicht klebrigen Dispersion, bevorzugt aber einer molekufardispersen Lösung des Klebstoffs in Wasser verstanden.

Wie bereits Eingangs erwähnt, dienen die im Rahmen des erfindungsgemäßen Verfahrens verwendeten Schmelzklebstoffe beispielsweise der Vereinfachung des Rückführung von bereits verklebten Papierlagen in den Stoffkreislauf zur Herstellung neuer Papierlagen. Hierzu werden die bereits verklebten Papierlagen in der Regel mit Wasser versetzt, das den Schmelzklebstoff auflöst und gleichzeitig einen zur weiteren Bearbeitung geeigneten Faserbrei erzeugt. Dieses Wasser weist in der Regel eine gegenüber der Umgebungstemperatur erhöhte Temperatur von beispielsweise etwa 25 bis etwa 80°C auf. In diesem Zusammenhang kann es vorkommen, daß bestimmte als Schmelzklebstoff geeignete Polymere bei erhöhter Temperatur keine ausreichende Löslichkeit in Wasser mehr aufweisen. Die Eigenschaft bestimmter makromolekularer Verbindungen bei Erwärmung einer Lösung der makromolekularen Verbindungen aus derselben auszufallen nennt man im allgemeinen "obere kritische Lösungstemperatur" (upper critical solution temperature, UCST). Dieses Phänomen zeigt sich in der Regel dahingehend, daß durch die Zusammenballung von nicht mehr in Lösung befindlichen Molekülen eine sichtbare Trübung erzeugt wird.

Gleichermaßen können bestimmte makromolekulare Verbindungen auch eine "untere kritische Lösungstemperatur" (lower critical solution temperature, LCST) zeigen. Dies bedeutet, daß gelöste makromolekularen Verbindungen bei einer Verringerung der Temperatur der Lösung aus derselben ausfallen. Hierdurch wird ebenfalls eine Trübung der Lösung verursacht.

Der besseren Beobachtbarkeit wegen wird im Rahmen des vorliegenden Textes daher vom "Trübungspunkt" gesprochen, d.h., von dem Punkt an dem eine meßbare Trübung der wäßrigen Lösung des Schmelzklebstoffes zu beobachten ist. Unter dem "oberen Trübungspunkt" wird dabei sowohl die auftretende Trübung verstanden welche aus einer UCST des Schmelzklebstoffs resultiert, unter dem "unteren Trübungspunkt" eine Trübung, die auf einer LCST beruht.

Wird beispielsweise ein Schmelzklebstoff eingesetzt, der aus unterschiedlichen Polymeren besteht, und weist mindestens eines der Polymeren eine UCST und mindestens eines der Polymeren eine LCST auf, so gibt es für eine wäßrige Lösung eines solchen Schmelzklebstoffes sowohl einen unteren Trübungspunkt (verursacht durch die LCST) als auch einen oberen Trübungspunkt (verursacht durch die UCST). Die Trübungspunkte werden als Temperatur angegeben, bei der eine Lösung des Schmelzklebstoffs eine mit dem Auge wahrnehmbare Trübung zeigt.

In einer bevorzugten Ausführungsform weist der wasserlösliche Schmelzklebstoff einen oberen Trübungspunkt von mindestens etwa 60°C bei einer 0,3 Gew.-%igen Lösung des Schmelzklebstoffs auf. Vorzugsweise liegt der Trübungspunkt bei 60°C für eine 1 Gew.-%ige und insbesondere für eine 3 Gew.-%ige Lösung.

Der untere Trübungspunkt sollte vorteilhafterweise bei weniger als etwa 20°C bei einer 0,3 Gew.-%igen Lösung des Schmelzklebstoffs liegen. Vorzugsweise liegt der Trübungspunkt bei weniger als etwa 20°C für eine 1 Gew.-%ige und insbesondere für eine 3 Gew.-%ige Lösung. Beispielsweise kann der untere Trübungspunkt bei etwa 10°C oder darunter, etwa 5 °C oder etwa 3°C, für die oben genannten Konzentration liegen.

In einer bevorzugten Ausführungsform der Erfindung werden Schmelzklebstoffe eingesetzt, die im wesentlichen unbegrenzt mit Wasser mischbar sind; d.h., die bei einer Konzentration von mindestens etwa 10 Gew.-% oder mehr, beispielsweise etwa 20 Gew.-% oder etwa 50 Gew.-% oder darüber, keine Mischungslücke aufweisen.

Die im Rahmen der vorliegenden Erfindung einsetzbaren Schmelzklebstoffe sind bei Raumtemperatur in der Regel fest und wenigstens teilweise kristallin. Der Kristallisationsgrad schwankt in weiten Bereichen je nach den Ausgangsstoffen und den Kristallisationsbedingungen. Er liegt beispielsweise bei mindestens etwa 20 bis etwa 100 %, insbesondere bei mindestens etwa 30 %, bezogen auf den Kristallisationsgrad, von Polyethylenglykol 6.000 (gemessen mit DSC). Der Schmelzpunkt der Schmelzklebstoffe liegt bei mindestens etwa 60°C kann jedoch auch beispielsweise etwa 70 bis etwa 100°C betragen, sofern die geforderten Viskositätswerte der Schmelze bei der Verarbeitungstemperatur erfüllt werden.

In einer besonderen Ausführungsform weist der Schmelzklebstoff eine Kristallinität (gemessen mittels DSC) von mindestens etwa 20% des für Polyethylenglykol mit einem Molekulargewicht (Mₙ) von 6000 gemessenen Wertes auf.

Es können auch 100% amorphe Systeme verwendet werden. Deren Glasübergangstemperatur (Tg) sollte aber mindestens etwa 30°C, bevorzugt mindestens etwa 50°C betragen.

Die Verarbeitung des Schmelzklebstoffs erfolgt in der Regel durch Auftrag des Klebstoffs auf die Papierlagen mittels üblicher Auftragsverfahren in geschmolzenem Zustand. Geeignete Auftragsverfahren sind beispielsweise der Auftrag durch Walzen, Schlitzdüsen oder Sprühdüsen.

Wird mittels einer Walze aufgetragen, so lassen sich in der Regel nur recht hohe Flächengewichte an Klebstoff realisieren. Der Walzenauftrag dient daher üblicherweise einer festen Verbindung der einzelnen Papierlagen. Für den Walzenauftrag sind beispielsweise Schmelzklebstoffe geeignet, die bei etwa 120 bis etwa 150°C eine Schmelzviskosität (Brookfield Thermosel, Spindel 27) von etwa 1.000 bis etwa 6.000, insbesondere etwa 2.000 bis etwa 3.000 mPas aufweisen. Mittels Walzenauftrag ist beispielsweise die Herstellung von befeuchtungsklebrigen Materialien möglich.

Unter "befeuchtungsklebrigen Materialien" werden Materialien verstanden, die durch Befeuchtung in selbstklebende Systeme überführt werden können. Hierzu zählen in der Regel Materialien, die mindestens einseitig eine Schicht aufweisen, die durch Befeuchtung mittels Wasser klebrig gemacht und beispielsweise auf ein zweites Material aufgebracht werden kann. Nach der Verdunstung des Wassers haften die Materialien adhäsiv aneinander. Beispiele für solche Materialien sind Briefmarken, Briefumschläge, Etiketten und dergleichen.

Wird der Schmelzklebstoff mittels einer Schlitzdüse aufgetragen, so wird dazu in der Regel ein Schmelzklebstoff eingesetzt, der bei etwa 120 bis etwa 150°C eine Schmelzviskosität (Brookfield Thermosel, Spindel 27) von etwa 400 bis etwa 20.000 mPas, insbesondere etwa 600 bis etwa 5.000 mPas aufweist.

Zur Verklebung von Tissues wird vorzugsweise der Auftrag des Schmelzklebstoffs mittels einer Sprühdüse bevorzugt, wobei kein vollflächiger Auftrag erzeugt wird. Die Tissueverklebung läßt sich sowohl mittels atomisierender als auch mittels nichtatomisierender Sprühdüsen durchführen, im letzteren Fall wird auch von Spinnsprühen gesprochen.

Atomisierende Sprühdüsen erfordern in der Regel einen Schmelzklebstoff, der bei etwa 120 bis etwa 150°C eine Schmelzviskosität (Brookfield Thermosel, Spindel 27) von etwa 400 bis etwa 10.000, insbesondere etwa 600 bis etwa 5.000 mPas aufweist. Nichtatomisierende Sprühdüsen erfordern Schmelzklebstoffe mit einer geringfügig höheren Viskosität, um die erforderliche Fadenkohäsion zu gewährleisten. Geeignet sind beispielsweise Schmelzklebstoffe mit einer Schmelzviskosität (Brookfield Thermosel, Spindel 27) von etwa 3.000 bis etwa 10.000 mPas bei einer Temperatur von etwa 120 bis etwa 150°C.

Ein weiterer Gegenstand der Erfindung ist ein Verfahren zur Herstellung befeuchtungsklebriger Materialien, bei dem ein Schmelzklebstoff mit einer Löslichkeit in Wasser bei etwa 20°C von mindestens etwa 3 Gew.-% auf Papier aufgetragen wird. Der Auftrag erfolgt durch Sprüh- oder Walzverfahren, insbesondere mittels einer Walze.

Die Verwendung von Polyalkylenglykol mit einem Molekulargewicht von mindestens 1000 und einer Wasserlöslichkeit von mindestens 3 Gew.-% bei 20°C als Schmeizklebstoff in dem erfindungsgemäßen Verfahren zur Herstellung von mindestens zweilagigen Hygienepapieren oder befeuchtungsklebriger Materialien ist bevorzugt.

Die Verwendung eines nichtionischen Polyurethans mit einem Molekulargewicht (Mₙ) von mindestens 2000 als Schmelzklebstoff in dem erfindungsgemäßen Verfahren zur Herstellung von mindestens zweilagigen Hygienepapieren oder befeuchtungsklebrigen Materialien ist bevorzugt.

Das erfindungsgemäße Verfahren wird nachfolgend durch Beispiele näher erläutert.

### Beispiele

### Herstellung der Schmelzklebstoffe

### Beispiel 1

97,3 Gew.-Teile Polyethylenglykol mit einer OH-Zahl von 19 (PEG 6000) wurden zwei Stunden bei 90°C und einem Druck von 1 mbar entwässert. Nach Zugabe von 2,7 Gew.-Teilen TMXDI wurde unter Stickstoffzuleitung die Reaktionstemperatur auf 140°C erhöht. Nach ca. 2 Stunden Reaktionszeit betrug der NCO-Wert 0%. Die Substanz wies eine Schmelzviskosität von ca. 5.500 mPas bei 150°C auf.

### Beispiel 2 bis 5

Analog dem in Beispiel 1 geschilderten Verfahren wurden die in der folgenden Tabelle 1 aufgeführten Polyurethane hergestellt.

**Tabelle 1**

| Beispiel Nr. | Zusammensetzung | Gewichtsteile | Schmelzviskosität [mPas] |
|---|---|---|---|
| 2 | PEG 12000/TMXDI | 98,8:1,2 | 39.400 (150°C) |
| 3 | PEG 12000/1,12-Octadecandiol/TMXDI | 91,1:4,6:4,3 | 40.000 (150°C) |
| 4 | PEG 12000/1,12-Octadecandiol/TMXDI | 90,9:4,6:4,5 | 71.000 (120°C) |
| 5 | PEG 1550/TMXDI | 86,6:13,4 | 8.500 (150°C) |
| 6 | PEG 3000/1,12-Octadecandiol/TMXDI | 86,4:4:9,6 | 12.800 (150°C) |
| 7 | PEG 3000/1,12-Octadecandiol/TMXDI | 89,5:2:8,5 | 18.000 (150°C) |
| 8 | PEG 6000/1,12-Octadecandiol/TMXDI | 89,1:4,1:6:8 | 16.000 (150°C) |

## Patentansprüche

1. Verfahren zur Herstellung befeuchtungsklebriger Materialien, bei dem ein wasserlöslicher Schmelzklebstoff auf Papier aufgetragen wird, oder mindestens zweilagiger Papierverbunde, bei dem ein wasserlöslicher Schmelzklebstoff auf eine erste Papierlage aufgetragen und mindestens eine zweite Papierlage auf der Klebstoffseite der ersten Papierlage aufkaschiert wird, wobei die Löslichkeit des Schmelzklebstoffs in Wasser bei 20°C mindestens 3 Gew.-% beträgt und wobei eine 0,3 Gew.-%ige Lösung des Schmelzklebstoffs in Wasser einen oberen Trübungspunkt von mindestens 60°C aufweist.

2. Verfahren nach Anspruch 1 **dadurch gekennzeichnet, daß** der Schmelzklebstoff bei einer Temperatur von 100 bis 180°C eine Schmelzviskosität (Brookfield Thermosel, Spindel 27) von 400 bis 20.000 mPas aufweist.

3. Verfahren nach einem der Ansprüche 1 bis 2, **dadurch gekennzeichnet, daß** der Schmelzklebstoff eine offene Zeit von mindestens 0,2 Sekunden aufweist.

4. Verfahren nach einem der Ansprüche 1 bis 3, **dadurch gekennzeichnet, daß** der Schmelzklebstoff eine Kristallinität (gemessen mittels DSC) von mindestens etwa 20 % des für Polyethylenglykol mit einem Molekulargewicht (Mₙ) von 6.000 gemessenen Wertes aufweist.

5. Verfahren nach einem der Ansprüche 1 bis 4, **dadurch gekennzeichnet, daß** als Schmelzklebstoff ein Polyalkylenglykol mit einem Molekulargewicht (Mₙ) von 1.000 bis 100.000 eingesetzt wird.

6. Verfahren nach einem der Ansprüche 1 bis 4, **dadurch gekennzeichnet, daß** als Schmelzklebstoff mindestens ein nichtionisches Polyurethan mit einem Molkekulargewicht (Mₙ) von mindestens 2.000 oder ein Polyester mit einem Molekulargewicht von mindestens etwa 3.000 eingesetzt wird.

7. Verfahren nach Anspruch 6, **dadurch gekennzeichnet, daß** das nichtionische Polyurethan durch Umsetzung mindestens eines Polyisocyanats mit mindestens einem Polyalkylenglykol mit einem Molekulargewicht von mindestens 1.550 erhältlich ist.

8. Verfahren nach Anspruch 5 zur Herstellung von mindestens zweilagigen Hygienepapieren oder befeuchtungsklebrigen Materialien.

9. Verfahren nach Anspruch 6 zur Herstellung von mindestens zweilagigen Hygienepapieren oder befeuchtungsklebrigen Materialien.

## Claims

1. A process for the production of moisture-tackifiable materials, in which a water-soluble hotmelt adhesive is applied to paper, or at least two-ply paper laminates, in which a water-soluble hotmelt adhesive is applied to a first layer of paper and at least a second layer of paper is laminated onto the adhesive side of the first layer, the solubility of the hotmelt adhesive in water at 20°C being at least 3% by weight and a 0.3% by weight solution of the hotmelt adhesive in water having an upper cloud point of at least 60°C.

2. A process as claimed in claim 1, **characterized in that** the hotmelt adhesive has a melt viscosity (Brookfield Thermocell, spindle 27) of 400 to 20,000 mPa.s at a temperature of 100 to 180°C.

3. A process as claimed in claim 1 or 2, **characterized in that** the hotmelt adhesive has an open time of at least 0.2 second.

4. A process as claimed in any of claims 1 to 3, **characterized in that** the hotmelt adhesive has a crystallinity (as measured by DSC) of at least about 20% of the value measured for polyethylene glycol with a molecular weight (Mₙ) of 6,000.

5. A process as claimed in any of claims 1 to 4, **characterized in that** a polyalkylene glycol with a molecular weight (Mₙ) of 1,000 to 100,000 is used as the hotmelt adhesive.

6. A process as claimed in any of claims 1 to 4, **characterized in that** at least one nonionic polyurethane with a molecular weight (Mₙ) of at least 2,000 or a polyester with a molecular weight of at least about 3,000 is used as the hotmelt adhesive.

7. A process as claimed in claim 6, **characterized in that** the nonionic polyurethane is obtainable by reacting at least one polyisocyanate with at least one polyalkylene glycol with a molecular weight of at least 1,550.

8. A process as claimed in claim 5 for the production of at least two-ply hygiene papers or moisture-tackifiable materials.

9. A process as claimed in claim 6 for the production of at least two-ply hygiene papers or moisture-tackifiable materials.

## Revendications

1. Procédé de production de matériaux collants sous l'effet d'une humectation, dans lequel on dépose un adhésif fusible soluble dans l'eau sur du papier, ou des composites de papier à au moins deux couches, dans lequel on étale un adhésif fusible soluble dans l'eau sur une première couche de papier et on dépose au moins une seconde couche de papier sur le côté adhésif de la première couche de papier, la solubilité de l'adhésif fusible à 20°C étant d'au moins 3% en poids et une solution à 0,3% en poids de l'adhésif fusible dans l'eau présentant un point de trouble supérieur d'au moins 60°C.

2. Procédé selon la revendication 1, **caractérisé en ce que** l'adhésif fusible présente à une température de 100 à 180°C une viscosité au fondu (appareil Brookfield Thermosel, arbre 27) de 400 à 20 000 mPas.

3. Procédé selon l'une des revendications 1 et 2, **caractérisé en ce que** l'adhésif fusible présente une durée de traitement possible d'au moins 0,2 secondes.

4. Procédé selon l'une des revendications 1 à 3, **caractérisé en ce que** l'adhésif fusible présente une cristallinité (mesurée par DSC) d'au moins environ 20% de la valeur mesurée pour le polyéthylèneglycol avec un poids moléculaire (Mn) de 6000.

5. Procédé selon l'une des revendications 1 à 4, **caractérisé en ce qu'**on utilise comme adhésif fusible un polyalkylèneglycol ayant un poids moléculaire (Mn) de 1000 à 100 000.

6. Procédé selon l'une des revendications 1 à 4, **caractérisé en ce qu'**on utilise comme adhésif fusible au moins un polyuréthane non ionique ayant un poids moléculaire (Mn) d'au moins 2000 ou un polyester ayant un poids moléculaire d'au moins environ 3000.

7. Procédé selon la revendication 6, **caractérisé en ce qu'**on peut obtenir le polyuréthane non ionique par réaction d'au moins un polyisocyanate avec au moins un polyalkylèneglycol ayant un poids moléculaire d'au moins 1550.

8. Procédé selon la revendication 5 de fabrication de papiers hygiéniques ou de matériaux collants sous l'effet d'une humectation, à au moins deux couches.

9. Procédé selon la revendication 6 de fabrication de papiers hygiéniques ou de matériaux collants sous l'effet d'une humectation, à au moins deux couches.
